(19) Europäisches Patentamt
European Patent Office
Office européen des brevets

(11) Veröffentlichungsnummer: **0 456 108 A2**

# (12) EUROPÄISCHE PATENTANMELDUNG

(21) Anmeldenummer: **91107073.8**

(22) Anmeldetag: **02.05.91**

(51) Int. Cl.5: **A01N 39/04**, A01N 39/02, A01N 37/46

(30) Priorität: **10.05.90 DE 4014924**

(43) Veröffentlichungstag der Anmeldung: **13.11.91 Patentblatt 91/46**

(84) Benannte Vertragsstaaten: **AT BE CH DE DK ES FR GB GR IT LI NL SE**

(71) Anmelder: **BASF Aktiengesellschaft**
**Carl-Bosch-Strasse 38**
**W-6700 Ludwigshafen(DE)**

(72) Erfinder: **Schoenhammer, Alfons, Dr.**
**2011 Audubon**
**Greenville, Mississippi 38701(US)**
Erfinder: **Beck, Johannes, Dr.**
**5-6-7 Sakuragaoka**
**Setagajako, Tokyo 156(JP)**
Erfinder: **Wuerzer, Bruno, Dr.**
**Ruedigerstrasse 13**
**W-6701 Otterstadt(DE)**
Erfinder: **Westphalen, Karl-Otto, Dr.**
**Mausbergweg 58**
**W-6720 Speyer(DE)**

## (54) Herbizides Mittel aus einem N-Phenyl-3,4,5,6-tetrahydrophthalimid und einem Phenoxyalkancarbonsäurederivat.

(57) Herbizides Mittel, enthaltend inerte Zusatzstoffe und eine synergistisch wirksamen Menge mindestes eines N-Phenyl-3,4,5,6-tetrahydrophthalimids I

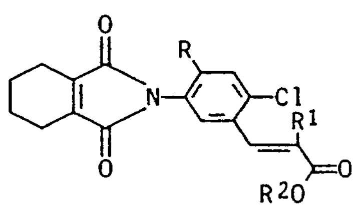

(I),

(R = H, F, Cl ; $R^1$ = H, Cl, Br, CN, $C_1$-$C_6$-Alkyl;
$R^2$ = H, $C_1$-$C_6$-Alkyl)
und mindestens ein Derivat einer substituierten Phenoxyalkancarbonsäure der Formel II

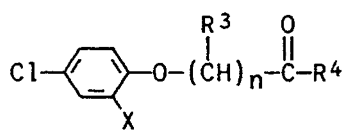

(II),

(n = 1, 2, 3; X = Cl, $CH_3$; $R^3$ = H, $CH_3$; $R^4$ = $OR^5$, $NR^6R^7$;
$R^5$ = $C_1$-$C_8$-Alkyl, H, ein Alkalimetallkation, das Äquivalent eines Erdalkalimetallions, ein Ammonium- oder substituiertes Ammoniumion;
$R^6$, $R^7$ = H, $C_1$-$C_4$-Alkyl).

EP 0 456 108 A2

Die vorliegende Erfindung betrifft ein herbizides Mittel mit synergistischer Wirkung aus einem N-Phenyl-3,4,5,6-tetrahydrophthalimid und einem Phenoxyalkancarbonsäurederivat.

Tetrahydrophthalimidderivate mit herbizider Wirkung sind aus dem Stand der Technik, z.B. aus DE-A-36 03 789, DE-A-36 07 300, DE-A-30 13 162, DE-A-31 09 035, DE-A-35 33 440, EP-A-61 741, EP-A-83 055, EP-A-68 822, EP-A-236 916, GB-A-20 71 100, US-A-3 878 224, JP 59/155 358 und JP 61/027 962 bekannt.

Derivate von substituierten Phenoxyalkancarbonsäuren wie Dichlorphenoxyessigsäure (2,4 D), Dichlorphenoxypropionsäure oder 4-Chlor-2-methyl-phenoxyessigsäure (MCPA) sind bekannt, z.B. aus K.H. Büchel, Pflanzenschutz und Schädlingsbekämpfung, Georg Thieme Verlag, 1977, Seite 173/174.

Mischungen aus Tetrahydrophthalimidderivaten mit anderen Herbiziden, u.a. Phenoxyalkancarbonsäuren werden gemäß der älteren deutschen Anmeldung P 39 06 916.2 zur Desikkation und Abszission von Pflanzenorganen, insbesondere zur Entblätterung von Baumwolle verwendet.

Bei Pflanzenschutzmitteln ist es grundsätzlich wünschenswert, die spezifische Wirkung eines Wirkstoffs und die Wirkungssicherheit zu erhöhen. Der Erfindung lag daher die Aufgabe zugrunde, die Wirkung von bekannten herbizid wirksamen Phenoxyalkancarbonsäuren II zu erhöhen.

Demgemäß wurde ein herbizides Mittel gefunden, das neben inerten Zusatzstoffen eine synergistisch wirksame Menge mindestes eines N-Phenyl-3,4,5,6-tetrahydrophthalimids der Formel I

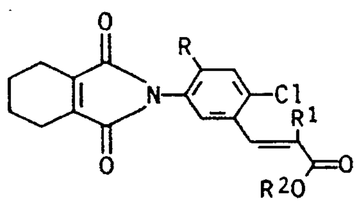

(I),

in der die Substituenten folgende Bedeutung haben:

- R Wasserstoff, Fluor oder Chlor
- $R^1$ Wasserstoff, Chlor, Brom, Cyano, unverzweigtes oder verzweigtes $C_1$-$C_6$-Alkyl
- $R^2$ Wasserstoff, unverzweigtes oder verzweigtes $C_1$-$C_6$-Alkyl

und mindestens ein Derivat einer substituierten Phenoxyalkancarbonsäure der Formel II

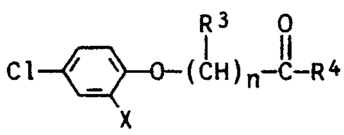

(II),

in der n für 1, 2 oder 3 steht und die Substituenten folgende Bedeutung haben:

- X Chlor oder Methyl
- $R^3$ Wasserstoff oder Methyl
- $R^4$ eine Gruppe $OR^5$ oder $NR^6R^7$, worin
- $R^5$ unverzweigtes oder verzweigtes $C_1$-$C_8$-Alkyl, Wasserstoff, ein Alkalimetallkation, das Äquivalent eines Erdalkalimetallions oder ein Ammonium- oder substituiertes Ammoniumion und
- $R^6$, $R^7$ Wasserstoff, unverzweigtes oder verzweigtes $C_1$-$C_4$-Alkyl bedeuten,

enthält.

Die erfindungsgemäßen Mischungen zeigen eine überadditive synergistische Wirkung und sind für diejenigen Kulturpflanzen selektiv, für welche die Einzelverbindungen selbst auch verträglich sind.

Im Hinblick auf ihre synergistische herbizide Wirkung besonders bevorzugte N-Phenyl-3,4,5,6-tetrahydro-phthalimide I sind solche, in denen R Fluor und insbesondere Wasserstoff darstellt, $R^1$ Halogen oder unverzweigtes oder verzweigtes $C_1$-$C_4$-Alkyl wie Methyl, Ethyl, n-Propyl, Isopropyl, n-Butyl und tert.-Butyl bedeutet und $R^2$ für unverzweigtes oder verzweigtes $C_1$-$C_4$-Alkyl wie vorstehend genannt, insbesondere Methyl oder Ethyl steht.

Bevorzugte Verbindungen I sind in der folgenden Tabelle zusammengestellt, wobei die Konfiguration an der Doppelbindung E oder Z sein kann.

Tabelle

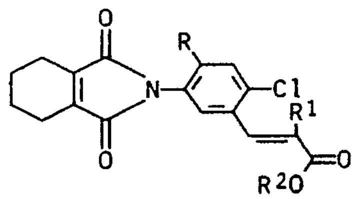

(I),

| Nr. | R | $R^1$ | $R^2$ |
|---|---|---|---|
| I.1 | H | Br | $CH_3$ |
| I.2 | H | Br | $C_2H_5$ |
| I.3 | H | Cl | $CH_3$ |
| I.4 | H | Cl | $C_2H_5$ |
| I.5 | H | $CH_3$ | $CH_3$ |
| I.6 | H | $CH_3$ | $C_2H_5$ |
| I.7 | F | Br | $CH_3$ |
| I.8 | F | $CH_3$ | $C_2H_5$ |

In den Phenoxyalkancarbonsäurederivaten der Formel II steht n vorzugsweise für 1, $R^2$ und $R^3$ haben die o.g. Bedeutung und $R^4$ steht für eine Gruppe $OR^5$, wobei $R^5$ Wasserstoff, Natrium, Kalium, Magnesium, Ammonium oder durch ein bis drei $C_1$-$C_4$-Alkyl- oder Hydroxyalkylreste substituiertes Ammoniumionen bedeutet oder einen $C_1$-$C_8$-Alkylrest, insbesondere einen $C_1$-$C_4$-Alkylrest, darstellt.

Bevorzugte Verbindungen der Formel II sind z.B. 2,4-Dichlorphenoxy-essigsäure, dessen Natrium- oder Magnesiumsalz, dessen Dimethylaminsalz oder Triethanolaminsalz oder dessen Isobutylester oder Isooctylester;
2-Methyl-4-chlor-phenoxyessigsäure oder dessen o.g. bevorzugte Salze oder Ester; 2-(4-Chlor-2-methylphenoxy)-propionsäure oder dessen o.g. bevorzugte Salze oder Ester; 2-Methyl-4-chlor-phenoxyessigsäure und dessen o.g. Salze und Ester in Form der optisch aktiven D-Form; 2-(2,4-Dichlorphenoxy)-propionsäure sowie des o.g. bevorzugte Salze und Ester in racemischer oder optisch aktiver D-Form.

In den erfindungsgemäßen Mischungen werden die Komponenten I und II in solchen Gewichtsanteilen verwendet, daß der gewünschte synergistische Effekt auftritt. Vorzugsweise liegen die Gewichtsverhältnisse der Komponenten I:II bei 1:0,8 bis 1:40, insbesondere bei 1:1, bis 1:20, besonders bevorzugt bei 1:1 bis 1:15.

Die N-substituierten Tetrahydrophthalimide I sind aus 3,4,5,6-Tetrahydrophthalsäureanhydrid und entsprechend substituierten Anilinderivaten, die durch Reduktion der entsprechenden Nitroverbindungen erhältlich sind, zugänglich. In der Regel wird die Umsetzung in einem inerten Lösungsmittel bei Temperaturen von 20 bis 200 °C, vorzugsweise 40 bis 150 °C durchgeführt. Als Lösungsmittel eignen sich z.B. niedere Alkancarbonsäuren wie Eisessig und Propionsäure oder aprotische Lösungsmittel wie Toluol und Xylol in Gegenwart von sauren Katalysatoren, z.B. aromatischen Sulfonsäuren.

Sie können auch dadurch hergestellt werden, daß man einen Aldehyd der Formel III

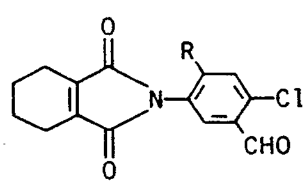

III

mit einem Phosphoran der Formel IV

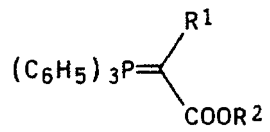 IV

worin Ar einen unsubstituierten oder substituierten Phenylrest bedeutet, bei Temperaturen von -10 bis 100°C und in Gegenwart eines Lösungsmittels umsetzt. Die als Ausgangsmaterial verwendeten Aldehyde der allgemeinen Formel III sind nach den Methoden der EP-A-340 708 auf einfache Weise zugänglich. Der Rest R dieser Verbindungen kann für Wasserstoff oder Fluor stehen.

Die zur Herstellung der Tetrahydrophthalimide benötigen Phosphorane IV, welche auch als Phosphor-Ylide bezeichnet werden, sind nach literaturbekannten Methoden (z.B. Houben-Weyl, Methoden der Organischen Chemie, Bd. E1, S. 636-639, Georg-Thieme Verlag, Stuttgart 1982) erhältlich.

Die erfindungsgemäßen Mittel aus den Wirkstoffen I und II können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Napthalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin-, Sulfitablaugen und Methylcellulose in Betracht.

Pulver-, Streu- und Umhüllungs-, Imprägnierungs- und Homogengranulate, können durch Bindung der Wirkstoffe an feste Trägerstoffe hergestellt werden. Feste Trägerstoffe sind Mineralerden wie Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gew.%, vorzugsweise zwischen 0,5 und 90 Gew.%, Wirkstoff.

Die erforderliche Aufwandmenge an reiner Wirkstoffmischung, d.h. ohne Formulierungshilfsmittel, ist abhängig von der Zusammensetzung des Pflanzenbestandes, vom Entwicklungsstadium der Pflanzen, von den klimatischen Verhältnissen am Einsatzort sowie von der Anwendungstechnik. Im allgemeinen liegen die Aufwandmengen von I plus II bei 0,001 bis 5 kg/ha, vorzugsweise 0,01 bis 3 kg/ha, insbesondere 0,01 bis 1,5 kg/ha.

Die Mittel werden den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 1/ha erfolgen. Eine Anwendung der Mittel im sogenannten "Low Volume"- und "Ultra-low-Volume"-Verfahren ist ebenso möglich wie ihre Applikation in Form von sogenannten Mikrogranulaten.

Anwendungsbeispiele

Als Vertreter der N-Phenyl-3,4,5,6-tetrahydrophthalimide der Formel I wurde in den nachfolgenden Versuchen die Verbindung Nr. I.1 (s. Tabelle) ausgewählt.

Als Vertreter der substituierten Phenoxyalkancarbonsäuren der Formel II dienten die folgenden Verbindungen:

II.1 2-Methyl-4-chlor-phenoxyessigsäure des Dimethylaminsalz (500 g/l EC)
II.2 2,4-Dichlorphenoxyessigsäure als Dimethylaminsalz (500 g/l EC)
II.3 2(4-Chlor-2-methylphenoxy)-propionsäure in optisch aktiver D-Form
  a) als Isobutylester (600 g/l EC)
  b) als freie Säure (50 % WP)
  c) als Mg-Salz (50 % WP)
II.4 2-(4-Chlor-2-methylphenoxy)-propionsäure in racemischer Form als Dimethylaminsalz (560 g/l EC)
II.5 2,4-Dichlorphenoxypropionsäure
  a) als Isobutylester (600 g/l EC)
  b) als Isooctylester (480 g/l EC).

Die Applikation der Herbizidmischungen erfolgte im Nachauflaufverfahren (Blattbehandlung), wobei die Wirkstoffe als Spritzpulver (50 % wettable powder (WP) oder als Emulsionskonzentrat (EC) mit 100 und 200 g/l Wirkstoff ausgebracht wurde.

Es handelt sich um Freilandversuche mit Kleinparzellen auf einem Standort mit leichtem, sandigem Lehm (pH 5,5 bis 6,5; 1,2 % Humus) als Boden. Getreide wurde als Kulturpflanze in Reihen eingesät. Die unerwünschten Pflanzen waren Bestandteil der natürlich vorkommenden Vegetation.

Liste der Restpflanzen

| Lat. Name | Deutscher Name | Englischer Name |
|---|---|---|
| Hordeum vulgare | Gerste | barley |
| Matricaria spp. | Kamillearten | chamomile |
| Polygonum aviculare | Vogelknöterich | prostrate knotweed |
| Polygonum persicaria | Flohknöterich | Lady's-thumb |
| Stellaria media | Vogelsternmiere | chickweed |
| Triticum aestivum | Weizen | wheat |

Die Unkräuter hatten unterschiedliche Größen und Entwicklungsstadien, im Durchschnitt hatten sie 5 bis 20 cm je nach Wuchsform.

Die Mittel wurden allein und gemeinsam, letzteres teils als Tankmischung teils in Fertigformulierung, ausgebracht. Dies geschah in Wasser (350 l/ha); als Verteilungsmittel je nach Aufbereitung der Wirkstoffe in Form von Emulsionen, wäßrigen Lösungen oder Suspensionen. Die Ausbringung erfolgte mit Hilfe einer fahrbaren Parzellenspritzmaschine.

Die Versuchsperiode erstreckte sich über 6 bis 8 Wochen, wobei die Bestände auch noch zu späteren Zeiten beobachtet wurden.

Die Schädigung durch die chemischen Mittel wurde anhand einer Skala von 0 % bis 100 % im Vergleich zu unbehandelten Kontrollparzellen bewertet. Dabei bedeutet 0 keine Schädigung und 100 eine völlige Zerstörung der Pflanzen.

In den folgenden Beispielen wird die Wirkung der erfindungsgemäß verwendbaren Mittel gezeigt, ohne die Möglichkeit weiterer Anwendungen auszuschließen.

Bei diesen Beispielen wurde nach der Methode von S. R. Colby (1967): Calculating synergistic and antagonistic responses of herbicide combinations, Weeds 15, 20 ff derjenige Wert E errechnet, der bei einer nur additiven Wirkung der Einzelwirkstoffe zu erwarten ist.

Die Berechnung erfolgt nach

$$E = X + Y - \frac{XY}{100}$$

wobei

X = Prozentsatz Wirkung mit Präparat A bei einer Aufwandmenge a

Y = Prozentsatz Wirkung mit Präparat B bei einer Aufwandmenge b

E = zu erwartende Wirkung (in %) durch A + B bei Aufwandmengen a + b

bedeuten.

Ist der beobachtete Wert höher als der nach Colby errechnete Wert E, so liegt eine synergistische Wirkung vor.

Die anschließenden Tabellen dokumentieren die herbizid synergistische Wirkung von Mischungen bestehend aus der Beispielsverbindung Nr. I.1 und einem Phenoxyalkancarbonsäurederivat der allgemeinen Formel II. A.S. steht jeweils für aktive Substanz, WP für wettable powder und EC für Emulsionskonzentrat.

Tabelle 1: Synergistische herbizide Aktivität der erfindungsgemäßen Mischungen am Beispiel von Polygonum aviculare bei Nachauflaufanwendung im Freiland

| Aufwandmenge [kg/ha a.S.] Herbizid Nr. I.1 als 50 % WP | Herbizid Nr. II.5.b) 600 g/l EC | Polygonum aviculare Schädigung [%] | Erwartungswert E (nach Colby) |
|---|---|---|---|
| 0,05 | - | 10 | - |
| 0,1 | - | 20 | - |
| 0,15 | - | 30 | - |
| - | 0,125* | 8 | - |
| - | 0,25 | 12 | - |
| - | 0,5 | 20 | - |
| 0,15 | 0,125 | 60 | 36 |
| 0,05 | 0,25 | 60 | 21 |
| 0,15 | 0,25 | 75 | 38 |
| 0,05 | 0,5 | 85 | 28 |
| 0,15 | 0,5 | 95 | 44 |

* auf Basis Säure

Tabelle 2: Synergistische herbizide Aktivität der erfindungsgemäßen Mischungen, aufgezeigt an Polygonum aviculare, Nachauflaufanwendung im Freiland

| Aufwandmenge [kg/ha a.S.] | | Polygonum aviculare | |
|---|---|---|---|
| Herbizid Nr. I.1 100 g/l EC | Herbizid Nr. II.3.a) 600 g/l EC | Schädigung [%] | Erwartungswert E (nach Colby) |
| 0,05 | - | 10 | - |
| 0,1 | - | 20 | - |
| 0,15 | - | 30 | - |
| - | 0,125* | 2 | - |
| - | 0,25 | 10 | - |
| - | 0,5 | 12 | - |
| 0,15 | 0,125 | 60 | 31 |
| 0,15 | 0,25 | 65 | 37 |
| 0,05 | 0,5 | 65 | 21 |
| 0,1 | 0,5 | 100 | 30 |
| 0,15 | 0,5 | 100 | 38 |

* auf Basis Säure

Tabelle 3: Synergistisch wirkende Mischungen am Beispiel von Matricaria bei Nachauflaufanwendung im Freiland

| Aufwandmenge [kg/ha a.S.] Herbizid Nr. I.1 100 g/l EC | Aufwandmenge [kg/ha a.S.] Herbizid Nr. II.3 | Matricaria spp. Schädigung in [%] | Matricaria spp. Erwartungswert E | Tricium aestivum Schädigung in [%] 1. Bonitur | Tricium aestivum Schädigung in [%] 2. Bonitur |
|---|---|---|---|---|---|
| 0,05 | - | 42 | - | 8 | 2 |
| | II.3.a (600 g/l EC) | | | | |
| - | 0,25* | 0 | - | 0 | 0 |
| - | 0,5 | 18 | - | 5 | 2 |
| 0,05 | 0,25 | 82 | 42 | 15 | 0 |
| 0,05 | 0,5 | 95 | 52 | 15 | 0 |
| | II.3.b* (50 % WP) | | | | |
| - | 0,5* | 0 | - | 0 | 0 |
| - | 1,0 | 25 | - | 2 | 0 |
| 0,05 | 0,5 | 95 | 42 | 10 | 2 |
| 0,05 | 1,0 | 98 | 56 | 10 | 0 |
| | II.3.c (50 % WP) | | | | |
| - | 0,5 | 5 | - | 0 | 0 |
| - | 1,0 | 12 | - | 0 | 0 |
| 0,05 | 0,5 | 82 | 45 | 8 | 0 |
| 0,05 | 1,0 | 88 | 49 | 5 | 0 |

* auf Basis Säure

Tabelle 3a: Verbindung Nr. I.1 als Spritzpulver formuliert in synergistischen Mischungen bei Nachauflaufanwendung im Freiland

| Aufwandmenge [kg/ha a.S.] | | Matricaria spp. | | Polygonum aviculare | |
|---|---|---|---|---|---|
| Herbizid Nr. I.1 50 % WP | Herbizid Nr. II.3 | Schädigung [%] | E | Schädigung [%] | E |
| 0,1 | - | 30 | - | 15 | - |
| 0,15 | - | 35 | - | 25 | - |
| | II.3.a (600 g/l EC) | | | | |
| - | 0,25* | 0 | - | 8 | - |
| - | 0,5 | 18 | - | 18 | - |
| 0,1 | 0,25 | 82 | 30 | 80 | 22 |
| 0,1 | 0,5 | 78 | 43 | 82 | 30 |
| | II.3.b* (50 % WP) | | | | |
| - | 1,0* | 25 | - | 5 | - |
| - | 1,5 | 45 | - | 18 | - |
| 0,1 | 1,0 | 85 | 46 | 85 | 19 |
| 0,1 | 1,5 | 88 | 62 | 80 | 30 |
| | II.3.c (50 % WP) | | | | |
| - | 1,0 | 12 | - | 10 | - |
| - | 1,5 | 20 | - | 12 | - |
| 0,1 | 1,0 | 90 | 38 | 62 | 23 |
| 0,1 | 1,5 | 95 | 44 | 62 | 25 |

* auf Basis Säure

Tabelle 4: Synergistisch wirkende Herbizidmischungen bei Nachlaufaufanwendung im Freiland

| Aufwandmenge [kg/ha a.S.] | | Matricaria spp. | | Polygonum aviculare | | Triticum aestivum Schädigung in [%] | |
|---|---|---|---|---|---|---|---|
| Herbizid Nr. I.1 100 g/l EC | Herbizid Nr. II.5.b) 480 g/l EC | Schädigung [%] | Erwartungswert E | Schädigung [%] | Erwartungswert E | 1. Bonitur | 2. Bonitur |
| 0,03 | - | 83 | - | 32 | - | 7 | 0 |
| 0,06 | - | 93 | - | 42 | - | 13 | 0 |
| - | 0,5* | 53 | - | 24 | - | 1 | 0 |
| - | 1,0 | 73 | - | 48 | - | 5 | 1 |
| 0,03 | 0,45** | 100 | 82 | 82 | 41 | 15 | 1 |
| 0,06 | 0,9 | 100 | 90 | 98 | 58 | 20 | 1 |

* auf Basis Säure

** in Fertigformulierung (Berechnung mit 0,5 und 1,0)

Tabelle 5: Synergistische herbizide Mischungen enthaltend Verbindung II.1 bei Nachauflaufanwendung im Freiland

| Aufwandmenge [kg/ha a.S.] | | Stellaria media | | Triticum aestivum |
|---|---|---|---|---|
| Herbizid Nr. I.1 200 g/l EC | Herbizid Nr. II.1 500 g/l EC | Schädigung [%] | Erwartungswert E (nach Colby) | |
| 0,03 | - | 0 | - | 0 |
| 0,06 | - | 10 | - | 2 |
| 0,125 | - | 20 | - | 10 |
| - | 1,0* | 70 | - | 2 |
| 0,03 | 1,0 | 98 | 70 | 0 |
| 0,06 | 1,0 | 100 | 73 | 4 |
| 0,125 | 1,0 | 100 | 76 | 14 |

* auf Basis Säure

Tabelle 6: Synergistische herbizide Mischungen enthaltend Verbindung II.2 bei Nachauflaufanwendung im Freiland

| Aufwandmenge [kg/ha a.S.] | | Matricaria spp. | | Hordeum vulgare |
|---|---|---|---|---|
| Herbizid Nr. I.1 200 g/l EC | Herbizid Nr. II.2 500 g/l EC | Schädigung [%] | Erwartungswert E (nach Colby) | |
| 0,06 | - | 80 | - | 2 |
| 0,125 | - | 95 | - | 5 |
| - | 0,5* | 45 | - | 0 |
| - | 0,75 | 52 | - | 0 |
| - | 1,0 | 65 | - | 2 |
| 0,06 | 0,5 | 100 | 89 | 0 |
| 0,125 | 0,5 | 100 | 97 | 5 |
| 0,06 | 0,75 | 100 | 90 | 2 |
| 0,125 | 0,75 | 100 | 98 | 7 |
| 0,06 | 1,0 | 100 | 93 | 5 |
| 0,125 | 1,0 | 100 | 98 | 10 |

* auf Basis Säure

Tabelle 7: Synergistische herbizide Mischung, enthaltend Verbindung II.4 bei Nachauflaufanwendung im Freiland

| Aufwandmenge [kg/ha a.S.] Herbizid Nr. I.1 200 g/l EC | Herbizid Nr. II.4 560 g/l EC | Polygonum persicaria Schädigung [%] | Erwartungswert E (nach Colby) | Triticum aestivum |
|---|---|---|---|---|
| 0,06 | - | 75 | - | 2 |
| 0,125 | - | 90 | - | 5 |
| - | 0,5* | 15 | - | 2 |
| - | 1,0 | 35 | - | 2 |
| 0,06 | 0,5 | 100 | 79 | 2 |
| 0,06 | 1,0 | 100 | 84 | 2 |
| 0,125 | 0,5 | 100 | 92 | 2 |
| 0,125 | 1,0 | 100 | 94 | 4 |

* auf Basis Säure

## Patentansprüche

1. Herbizides Mittel, enthaltend inerte Zusatzstoffe und eine synergistisch wirksamen Menge mindestens eines N-Phenyl-3,4,5,6-tetrahydrophthalimids der Formel I

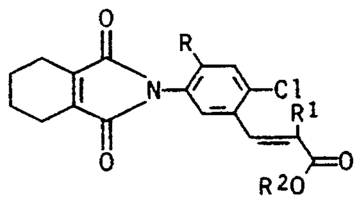

(I),

in der die Substituenten folgende Bedeutung haben:

- R Wasserstoff, Fluor oder Chlor;
- $R^1$ Wasserstoff, Chlor, Brom, Cyano oder $C_1$-$C_6$-Alkyl;
- $R^2$ Wasserstoff, $C_1$-$C_6$-Alkyl

und mindestens ein Derivat einer substituierten Phenoxyalkancarbonsäure der Formel II

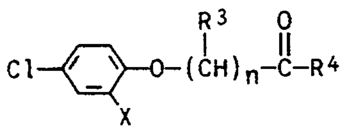

(II),

in der n für 1, 2 oder 3 steht und die Substituenten folgende Bedeutung haben:

- X Chlor oder Methyl
- $R^3$ Wasserstoff oder Methyl
- $R^4$ eine Gruppe $OR^5$ oder $NR^6R^7$, worin
- $R^5$ $C_1$-$C_8$-Alkyl, Wasserstoff, ein Alkalimetallkation, das Äquivalent eines Erdalkalimetallions oder ein Ammonium- oder substituiertes Ammoniumion und
- $R^6$, $R^7$ Wasserstoff oder $C_1$-$C_4$-Alkyl bedeuten.

**2.** Herbizides Mittel nach Anspruch 1, enthaltend ein N-Phenyl-3,4,5,6-tetrahydrophthalimid der Formel I und ein Phenoxyalkancarbonsäurederivat der Formel II im Gewichtsverhältnis 1 : 0,8 bis 1 : 40.

**3.** Herbizides Mittel nach Anspruch 1, enthaltend ein N-Phenyl-3,4,5,6-tetrahydrophthalimid der Formel I und ein Phenoxyalkancarbonsäurederivat der Formel II im Gewichtsverhältnis 1 : 1 bis 1 : 20.

**4.** Verfahren zur Bekämpfung unerwünschten Pflanzenwuches, dadurch gekennzeichnet, daß man ein N-Phenyl-3,4,5,6-tetrahydrophthalimid der Formel I gemäß Anspruch 1 und ein substituiertes Phenoxyalkancarbonsäurederivat der Formel II gemäß Anspruch 1 vor, während und/oder nach dem Auflaufen von unerwünschten Pflanzen gleichzeitig oder nacheinander ausbringt.

**5.** Verfahren zur Bekämpfung von unerwünschtem Pflanzenwuchs, dadurch gekennzeichnet, daß man die Blätter der Kulturpflanzen und der unerwünschten Pflanzen mit einem N-Phenyl-3,4,5,6-tetrahydrophthalimid der Formel I gemäß Anspruch 1 und ein substituiertes Phenoxyalkancarbonsäurederivat der Formel II gemäß Anspruch 1 gleichzeitig oder nacheinander behandelt.